# EUROPÄISCHE PATENTANMELDUNG

(11) **EP 0 924 955 A2**
(43) Veröffentlichungstag der Anmeldung: **23.06.1999**
(21) Anmeldenummer: 98402931.4
(22) Anmeldetag: 23.11.1998
(51) Int. Cl.: H04Q 11/04

(54) **Anordung zur leitungsgebundenen digitalen Nachrichtenübertragung**

(30) Priorität: 18.12.1997 DE 19756438
(71) Anmelder: ALCATEL, 75008 Paris (FR)
(72) Erfinder: Timmermann, Andreas, Dipl.-Ing., 30952 Ronnenberg (DE); Schröder, Jürgen, Dipl.-Ing., 31832 Springe (DE)
(74) Vertreter: Döring, Roger, Dipl.-Ing.

(57) **Zusammenfassung**

Es wird eine Anordnung zur leitungsgebundenen digitalen Nachrichtenübertragung zwischen einem Leitungsabschluß (1) eines Fernmeldenetzes und mit demselben verbundenen Teilnehmern (Tln) angegeben, bei welcher mindestens ein mit Endeinrichtungen ausgerüsteter Teilnehmer (Tln) über eine elektrische Leitung (L3) an einen Netzabschluß (2) angeschlossen ist, bei welcher der Netzabschluß (2) über eine metallische Leiter enthaltende Leitung (L2) mit dem Leitungsabschluß (1) verbunden ist und bei welcher der Leitungsabschluß mit einer Spannungsquelle (SV) zur eigenen Stromversorgung und zur Stromversorgung des Netzabschlusses (2) sowie der Endeinrichtungen der Teilnehmer (Tln) ausgerüstet ist. Zur Erhöhung der Betriebssicherheit sind im Netzabschluß (2) zwei getrennte Stromversorgungseinheiten (SVE1,SVE2) angeordnet, von denen eine zur Speisung der aktiven Komponenten des Netzabschlusses (2) und die andere zur Speisung der Endeinrichtungen der Teilnehmer (Tln) dient. Die beiden Stromversorgungseinheiten (SVE1, SVE2) sind über getrennte Leiter mit der Spannungsquelle (SV) des Leitungsabschlusses (1) verbunden.

## Beschreibung

Die Erfindung bezieht sich auf eine Anordnung zur leitungsgebundenen digitalen Nachrichtenübertragung zwischen einem Leitungsabschluß eines Fernmeldenetzes und mit demselben verbundenen Teilnehmern, bei welcher mindestens ein mit Endeinrichtungen ausgerüsteter Teilnehmer über eine elektrische Leitung an einen Netzabschluß angeschlossen ist, bei welcher der Netzabschluß über eine metallische Leiter enthaltende Leitung mit dem Leitungsabschluß verbunden ist und bei welcher der Leitungsabschluß mit einer Spannungsquelle zur eigenen Stromversorgung und zur Stromversorgung des Netzabschlusses sowie der Endeinrichtungen der Teilnehmer ausgerüstet ist (DE 43 43 456 A1).

Die digitale Übertragungstechnik ermöglicht das Angebot unterschiedlichster Dienste, die von den Teilnehmern eines Fernmeldenetzes genutzt werden können. Die Dienste umfassen u. a. Telefon, Telefax, IDN und ISDN (Basis- und Primärmultiplexanschlüsse). Von besonderer Bedeutung ist dabei der Teilnehmeranschlußbereich des Fernmeldenetzes, also das Anschlußleitungsnetz. Es sind aber auch andere Verbindungen von Teilnehmern von Interesse, beispielsweise Direktverbindungen - sogenannte Punkt-zu-Punkt-Verbindungen. In allen bekannten _{"}Netzstrukturen" ist ein Netzabschluß mit einer Stromversorgungseinheit vorhanden, an den mindestens ein Teilnehmer mit seinen Endeinrichtungen angeschlossen ist.

Ein Anschlußleitungsnetz geht beispielsweise aus der eingangs erwähnten DE 43 43 456 A1 hervor. Der Leitungsabschluß ist hier als Kabelverzweiger mit aktiven Komponenten ausgebildet. Er ist mit einer Vermittlungsstelle des Fernmeldenetzes über optische und/oder elektrische Kabel oder Leitungen verbunden. Die mit aktiven Komponenten ausgerüsteten Netzabschlüsse sind als Endverzweiger bezeichnet. Sie sind mit dem Kabelverzweiger über Kabel bzw. Leitungen verbunden, die zumindest elektrische Leiter enthalten. Es ist dadurch möglich, alle aktiven Komponenten des Kabelverzweigers selbst und der Endverzweiger sowie die Endeinrichtungen der Teilnehmer zentral aus der Spannungsquelle des Kabelverzweigers mit Strom zu versorgen. Die Endverzweiger und die ihnen zugeordneten Schalteinheiten können beispielsweise jeweils im Gebäude eines Teilnehmers oder mehrerer Teilnehmer installiert werden. Von dort aus gehen nur noch kurze elektrische Leitungen zu den Geräten der Teilnehmer. Jedem Teilnehmer können daher problemlos Kanäle mit einer Übertragungsrate von beispielsweise 2 Mbit/s angeboten und durchgeschaltet werden. Diese Anordnung hat sich in der Praxis bewährt.

Der Erfindung liegt die Aufgabe zugrunde, die Sicherheit der eingangs geschilderten Anordnung bei der Nachrichtenübertragung weiter zu erhöhen.

Diese Aufgabe wird gemäß der Erfindung dadurch gelöst,
- daß im Netzabschluß zwei getrennte Stromversorgungseinheiten angeordnet sind, von denen eine zur Speisung der aktiven Komponenten des Netzabschlusses und die andere zur Speisung der Endeinrichtungen der Teilnehmer dient, und
- daß die beiden Stromversorgungseinheiten über getrennte Leiter mit der Spannungsquelle des Leitungsabschlusses verbunden sind.

Bei dieser Anordnung sind die Stromversorgungseinheiten des Netzabschlusses einerseits und der Teilnehmer mit ihren Endeinrichtungen andererseits unanhängig von einander mit der zentralen Spannungs- bzw. Stromquelle des Leitungsabschlusses verbunden. Ein Fehler beim Teilnehmer, beispielweise ein Kurzschluß, kann sich dadurch auf den Netzabschluß nicht auswirken. Der Netzabschluß und damit die Übertragungstechnik desselben bleiben auch dann funktionsfähig. Mittels eines heute bei Fernmeldenetzen üblichen Managementsystems kann die entstandene Störung auf diese Weise schnellstens festgestellt und in kurzer Zeit behoben werden.

Von besonderem Vorteil ist die Anordnung dann, wenn zwei oder mehr Teilnehmer an einen Netzabschluß angeschlossen sind. Eine bei einem Teilnehmer auftretende Störung kann mit dem Managementsystem nicht nur festgestellt, sondern auch geortet werden. Auch dann ist eine schnelle Beseitigung der Störung möglich.

Ausführungsbeispiele des Erfindungsgegenstandes sind in den Zeichnungen dargestellt.

Es zeigen:
Fig 1 und 2 zwei Blockschaltbilder von unterschiedlichen Anordnungen nach der Erfindung in schematischer Darstellung.
Fig. 3 eine Einzelheit der Anordnung nach Fig. 2 für einen Teilnehmer.

_{"}Leitungsabschluß" im Sinne der Erfindung ist beispielweise eine Vermittlungsstelle eines Fernmeldenetzes. Die zu übertragenden Daten erreichen den Leitungsabschluß durch übergeordnete Teile des Fernmeldenetzes in der einen Richtung oder von den angeschlossenen Teilnehmern in der anderen Richtung. Der _{"}Netzabschluß" ist ein Gerät, an das die Teilnehmer mit ihren Endeinrichtungen angeschlossen sind. Er enthält beispielsweise Verstärker, Empfangs- und Sendeeinrichtungen, Multiplexer und Demultiplexer, um die zu übertragenden Daten dem jeweiligen Teilnehmer zuzuordnen bzw. um die Daten der Teilnehmer zu einem Datenstrom zusammenzufassen.

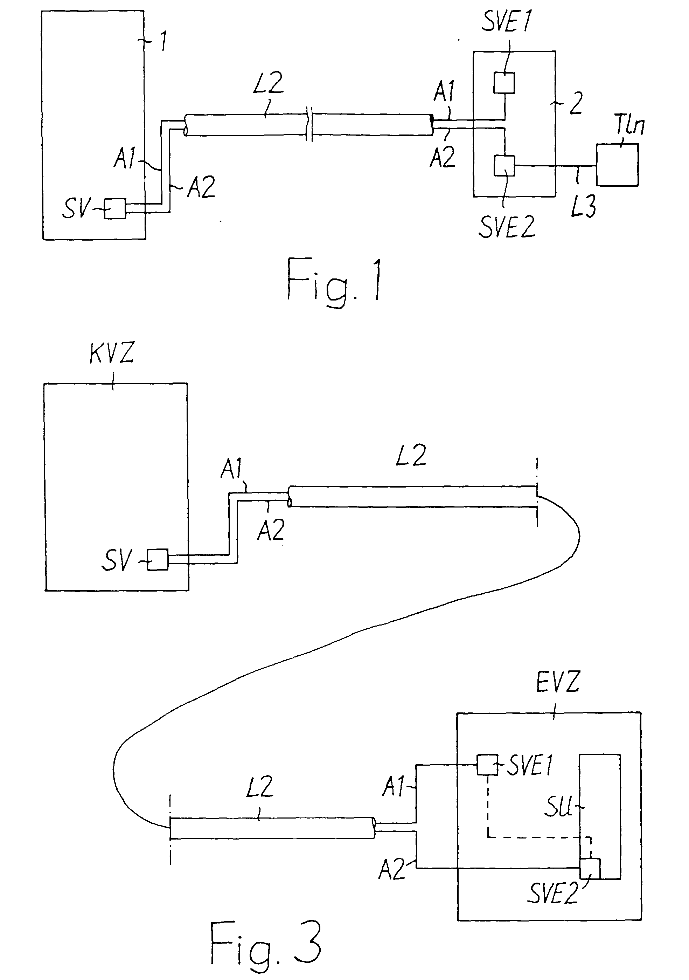

In Fig. 1 ist ein Ausschnitt aus einem Fernmeldenetz für eine Punkt-zu-Punkt-Übertragung dargestellt:

In einem Leitungsabschluß 1 eines Fernmeldenetzes ist eine Spannungsquelle SV angeordnet. Der Leitungsabschluß 1 kann eine Vermittlungsstelle eines Fernmeldenetzes sein. Als SV können das 230 V-Wechselstromnetz mit oder ohne Batterie-Pufferung oder eine ausreichend große Batterie verwendet werden. An den Leitungsabschluß 1 ist ein Netzabschluß 2 über ein Kabel bzw. eine Leitung L2 angeschlossen, das bzw. die zumindest zwei elektrische Aderpaare A1 und A2 enthält. Im Netzabschluß 2 ist Übertragungstechnik mit aktiven Komponenten vorhanden. Er verstärkt beispielsweise ein optisches oder elektrisches Eingangssignal, gewinnt die enthaltenen Daten zurück, wandelt sie gegebenenfalls in ein anderes Format und gibt sie an den angeschlossenen Teilnehmer TIn weiter. Bei mehreren TIn werden die Daten im Netzabschluß 2 außerdem dem jeweiligen TIn zugeordnet. In entgegengesetzter Übertragungsrichtung werden die Daten des bzw. der TIn vom Netzabschluß 2 zum Leistungsabschluß 1 weitergeleitet.

Der Netzabschluß 2 kann außerdem einen Managementblock enthalten. Er hat eine Stromversorgungseinheit SVE1 zur eigenen Stromversorgung. Die SVE1 ist über das Aderpaar A1 mit der SV des Leitungsabschlusses 1 verbunden. Eine zweite Stromversorgungseinheit SVE2 des Netzabschlusses 2 ist über das Aderpaar A2 an die SV des Leitungsabschlusses 1 angeschlossen. Mit der SVE2 ist der TIn mit seinen Endeinrichtungen verbunden. Er ist über eine elektrische Leitung L3 an den Netzabschluß 2 angeschlossen. Netzabschluß 2 und TIn werden dementsprechend getrennt voneinander mit Strom versorgt. Die Übertragungstechnik des Netzabschlusses 2 bleibt also funktionsfähig, auch wenn im Bereich des TIn eine Störung auftritt.

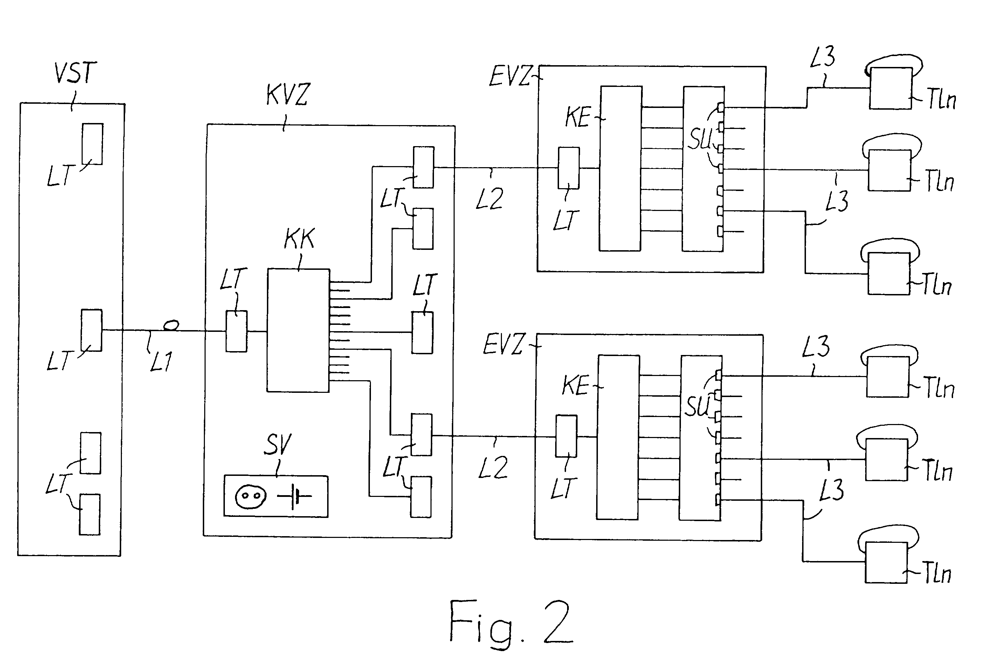

In den Fig. 2 und 3 ist ein Bereich eines Anschlußnetzes mit mehreren Teilnehmern dargestellt. Gleiche Teile wie in Fig. 1 sind mit den gleichen Bezugszeichen versehen:

An die Vermittlungsstelle VST eines Fernmeldenetzes - sie entspricht dem Leitungsabschluß 1 in Fig. 1 - ist hier ein Kabelverzweiger KVZ über eine Leitung L1 angeschlossen, die optische und/oder elektrische Übertragungselemente enthält. Im KVZ, der als aktiver Kabelverzweiger mit aktiven, elektrisch arbeitenden Komponenten ausgerüstet ist, befindet sich ein Kanalzuordner KK, der mindestens zwei Ausgänge zum Anschluß von Netzabschlüssen aufweist, die hier als ,,Endverzweiger EVZ" bezeichnet sind. Die Ausgänge des KK sind zu Leitungsabschlüssen LT geführt. Der KVZ ist mit den EVZ jeweils über die Leitung L2 verbunden, die zumindest elektrische Leiter enthält. Sie kann zusätzlich auch mit Lichtwellenleitern ausgerüstet sein. Der KVZ ist außerdem mit der Spannungsquelle SV zur Versorgung seiner elektrischen Komponenten ausgerüstet.

In den EVZ sind die Leitungen L2 an Leitungsabschlüsse LT angeschlossen. Auch die EVZ sind als aktive Endverzweiger mit aktiven, elektrisch arbeitenden Komponenten ausgerüstet. Sie weisen jeweils einen Kanalzuordner KE auf, der mindestens zwei Ausgänge zum Anschließen von Tln hat. Den EVZ zugeordnet sind außerdem Schalteinheiten SU, die mit dem KE verbunden sind. An jede SU ist ein TIn über eine elektrische Leitung L3 angeschlossen. Im dargestellten Ausführungsbeispiel sind drei TIn pro EVZ eingezeichnet. An einen EVZ soll mindestens ein TIn angeschlossen sein. Es können auch mehr als drei Tln sein. Die SUs sind den EVZ zugeordnet. Sie können räumlich mit denselben vereinigt sein. Es ist jedoch auch möglich, die SUs direkt bei den Tln anzuordnen und über elektrische Leitungen mit dem KE zu verbinden. Eine SU wandelt die vom EVZ kommenden Daten in ein dienstespezifisches Signal um, das z. B. ein analoges Sprachbandsignal oder ein digitales Signal in Form der Sₒ-Schnittstelle sein kann.

Die Hauptfunktion eines EVZ ist der Netzabschluß der Anschlußleitung L2. Diese kann - wie bereits erwähnt - zur Signalübertragung sowohl optische als auch elektrische Leiter enthalten. Der EVZ verstärkt das optische oder elektrische Eingangssignal, gewinnt die enthaltenen Daten zurück und verteilt sie auf die angeschlossenen SUs. Darüber hinaus kann der EVZ wieder einen Managementblock enthalten, über den sowohl die Überwachung des EVZ und der SUs, als auch die Einstellung des KE erfolgt. Auch die beiden Stromversorgungseinheiten SVE1 und SVE2 sind im EVZ angeordnet.

In den L2 sind mindestens die beiden elektrischen Aderpaare A1 und A2 vorhanden, die mit der SV des KVZ verbunden sind. Die Anschaltung dieser Aderpaare ist in den Zeichnungen ebensowenig genauer dargestellt, wie eine Verbindung der Übertragungselemente der L2 mit den aktiven Komponenten von KVZ und EVZ. In Fig. 3 ist der für die vorliegende Anordnung wesentliche Teil der L2 vergrößert dargestellt. Demnach sind an die SV im KVZ die beiden elektrischen Aderpaare A1 und A2 angeschlossen. Beide Aderpaare A1 und A2 führen jeweils zu einem EVZ. Dort ist das Aderpaar A1 direkt an die zentrale Stromversorgungseinheit SVE1 des EVZ angeschlossen, während das Aderpaar A2 mit der Stromversorgungseinheit SVE2 der SUs verbunden ist und somit deren Stromversorgung sicherstellt.

EVZ einerseits und SUs andererseits sind somit auf getrennten Wegen mit der SV des KVZ verbunden. Selbst wenn beispielsweise durch einen Kurzschluß alle SUs eines EVZ ausfallen, bleibt der EVZ funktionsfähig, d. h. die Übertragungstechnik in diesem Teil des Fernmeldenetzes bleibt erhalten. Das gilt auch bei anderen Störungen, wie beispielweise bei einem Baugruppenfehler in der SU (erhöhte Leistungsaufnahme bis hin zum Kurzschluß) oder bei planungsbedingter Überlast, z. B. Überschreitung des geplanten maximalen Gleichzeitigkeitsfaktors. Der an den SUs aufgetretene Fehler kann daher über das Managementsystem des Fernmeldenetzes schnell festgestellt und geortet werden. Er wird dann schnellstens behoben.

Es ist sowohl möglich, die Daten zusammen mit der Speisung der Stromversorgungseinheiten SVE1 und SVE2 über die Aderpaare A1 und A2 zu übertragen, als auch getrennt, z. B. über Glasfasern. Bei Datenübertragung über die elektrischen Adern ist es darüber hinaus möglich, die Daten über nur ein Aderpaar oder aufgeteilt über beide Aderpaare A1 und A2 zu übertragen.

Um überschüssige Energie der SVE1 oder der SVE2 nutzen zu können, kann zwischen der SVE1 und der SVE2 ein spannungsabhängig zu betätigender Schalter angebracht sein, durch welchen gegebenenfalls eine elektrisch leitende Verbindung zwischen den beiden Stromversorgungseinheiten hergestellt wird. Überschüssige Energie wird dann der jeweils anderen Stromversorgungseinheit zugeführt. Ein entsprechender Schalter kann beispielsweise eine regelbare Stromquelle sein.

## Patentansprüche

1. Anordnung zur leitungsgebundenen digitalen Nachrichtenübertragung zwischen einem Leitungsabschluß eines Fernmeldenetzes und mit demselben verbundenen Teilnehmern, bei welcher mindestens ein mit Endeinrichtungen ausgerüsteter Teilnehmer über eine elektrische Leitung an einen Netzabschluß angeschlossen ist, bei welcher der Netzabschluß über eine metallische Leiter enthaltende Leitung mit dem Leitungsabschluß verbunden ist und bei welcher der Leitungsabschluß mit einer Spannungsquelle zur eigenen Stromversorgung und zur Stromversorgung des Netzabschlusses sowie der Endeinrichtungen der Teilnehmer ausgerüstet ist, dadurch gekennzeichnet,
- daß im Netzabschluß (2) zwei getrennte Stromversorgungseinheiten (SVE1,SVE2) angeordnet sind, von denen eine zur Speisung der aktiven Komponenten des Netzabschlusses (2) und die andere zur Speisung der Endeinrichtungen der Teilnehmer (TIn) dient, und
- daß die beiden Stromversorgungseinheiten (SVE1, SVE2) über getrennte Leiter mit der Spannungsquelle (SV) des Leitungsabschlusses (1) verbunden sind.

2. Anordnung nach Anspruch 1, dadurch gekennzeichnet, daß zwischen den beiden Stromversorgungseinheiten (SVE1,SVE2) des Netzabschlusses (2) ein spannungsabhängig zu betätigender Schalter angeordnet ist, durch welchen überschüssige Energie der einen Stromversorgungseinheit der jeweils anderen zuführbar ist.

3. Anordnung nach Anspruch 1 oder 2, bei welcher an die Vermittlungsstelle mindestens ein aktive Komponenten aufweisender Kabelverzweiger als Leitungsabschluß angeschlossen ist, bei welcher an den Kabelverzweiger mindestens zwei aktive Komponenten aufweisende Endverzweiger als Netzabschlüsse über metallische Leiter enthaltende Leitungen angeschlossen sind, dadurch gekennzeichnet,
- daß jedem Endverzweiger (EVZ) mindestens zwei Schalteinheiten (SU) zugeordnet sind, wobei an jede Schalteinheit (SU) mindestens ein Teilnehmer (TIn) mit seinen Endeinrichtungen über eine elektrische Leitung (L3) angeschlossen ist,
- daß die Spannungsquelle (SV) im Kabelverzweiger (KVZ) angeordnet ist und daß die beiden Stromversorgungseinheiten (SVE1,SVE2) jeweils dem Endverzweiger (EVZ) einerseits und den Schalteinheiten (SU) andererseits zugeordnet sind.
